# EUROPEAN PATENT SPECIFICATION

(11) **EP 3 705 543 B1**
(45) Date of publication and mention of the grant of the patent: **04.08.2021**
(21) Application number: 20160505.2
(22) Date of filing: 02.03.2020
(51) Int. Cl.: C09D 105/06, C08J 5/18, C09D 5/00

(54) **PECTIN-BASED PRE-TREATMENT COMPOUND WITH ANCHORING FUNCTION FOR PLASTIC LAMINATES**
PECTINBASIERTE VORBEHANDLUNGSVERBINDUNG MIT VERANKERUNGSFUNKTION FÜR KUNSTSTOFFLAMINATE
COMPOSÉ DE PRÉTRAITEMENT À BASE DE PECTINE DOTÉ D'UNE FONCTION D'ANCRAGE POUR STRATIFIÉS EN PLASTIQUE

(30) Priority: 04.03.2019 IT 201900003103
(43) Date of publication of application: 09.09.2020
(73) Proprietor: M.F.W. S.r.l., 22053 Lecco (IT)
(72) Inventor: NOSOTTI, Walter, 20063 Cernusco sul Naviglio (Milano) (IT); FARRIS, Stefano, 22072 Cermenate (Como) (IT)
(74) Representative: Petruzziello, Aldo

(56) References cited:
- WO-A1-2010/089787
- WO-A1-2017/194547

## Description

The present invention relates to a pre-treatment compound based on amidated pectin to be interposed between a planar polyolefin substrate (e.g. polyethylene, polypropylene) and a coating layer, such as metallization, transparent metallization, printing or the like, where said pre-treatment compound has an anchoring function, similar to that of a primer, such as to avoid delamination between the substrate and the coating layer.

Furthermore, the present invention relates to a lacquer as defined above, capable also of giving the multi-layer plastic laminate properties of static barrier to gases and/or vapours, i.e. that do not change over time as a function of external stimuli.

In the packaging sector, in particular film packaging for food, a film with a multilayer laminate structure is largely used where the individual layers are normally different one from the other in terms of material and chemical and physical properties, where each layer has the purpose of providing certain features for the packaging film.

Among the most widespread solutions of this packaging is that formed by a substrate in plastic, such as for example a polyolefin, designed to give mechanical resistance to the structure on which are then applied, generally by spreading, one or more coatings with lower thickness, such as for example coatings based on PVOH (polyvinyl alcohol), EVOH (ethylene-vinyl alcohol), PVDC (polyvinylidene chloride), acrylic polymers or hybrid coatings (e. g. polyvinyl alcohol + metal alkoxide), to give barrier properties to gases.

Since the substrate is chemically different from subsequent coatings, it is necessary to use adhesives or adhesive layers in order to allow adhesion/anchorage between substrate and coating, and between the various subsequent coatings.

In particular, water-based coatings, currently preferred in that they are "greener", are easy to spread and anchor to the substrates in PET but are difficult to spread and anchor on polyolefin substrates, e.g. PE or PP, due to the low surface energy values of these polyolefin materials, making it necessary to use adhesive compounds/intermediates.

However, the adhesion/anchorage compounds currently used have considerable disadvantages mainly linked to the nature of the compounds used, which are predominantly synthetic and, in many cases, subject to stringent restrictions imposed by the legislator due to possible effects on human health.

This is the case, for example, of epoxy resins and the like wherein the presence of bisphenol A or its derivatives is found, which are known to be cytotoxic compounds capable of altering the activity of the endocrine apparatus (endocrine disruptors).

In particular, one of its derivatives, bisphenol A diglycidyl ether (BADGE), widely used in the sector of paints and adhesives, has been found capable of going beyond the human placenta and reaching the foetus: in fact, the abovementioned compounds are catalogued as possible compounds that cause damage to fertility.

For these reasons, some countries have banned the use of bisphenol and its derivatives (e.g. France), while others are moving towards strongly restricting use thereof until a viable alternative is found.

From this it is clear that there is a need to find an even safer anchoring agent for human health, which is also a "green" alternative from the point of view of the production process and from the point of view of the release into the environment of a lower quantity of plastic polymers derived from oil.

In addition, there is also the current need in the packaging sector to find "green" yet lighter packaging with the same final performances, in light of new trends in reduced environmental impact.

The object of the present invention is to overcome, at least in part, the disadvantages of the prior art by providing a primer that is compatible both with the polymer of the plastic substrate and with the various coatings provided for packaging films.

A further object is to provide a primer as defined above that allows an effective anchorage of metal-based coatings (conventional metallization and transparent metallization) on polyolefin substrates, e.g. PE or PP.

Another object is to obtain "green" and also lighter packaging with the same final performances.

These objects are achieved by the primer according to the invention having the features listed in the appended independent claim 1.

Advantageous embodiments of the invention are disclosed by the dependent claims.

A subject of the present invention relates to the use of an amidated pectin i.e. containing -NH₂ groups, as a pre-treating compound with an anchoring function to be deposited (spread) directly on substrates from polyolefin (e.g. polyethylene, polypropylene or the like), where said pre-treating compound is in contact, on the one side, with said plastic substrate and, on the other side, with at least one coating, including printing.

The term "pre-treating compound with an anchoring function" is intended here to identify a compound with a function of anchorage that serves to prepare the plastic substrate for the deposition of subsequent coatings that would otherwise not easily adhere to the substrate since the plastic, due to its molecular structure, has an inherent surface resistance to aqueous solutions that normally make up the various coatings, for example, metal oxide (SiOₓ and AlOₓ) or simple aluminium (Al) coatings used for transparent metallization and conventional (non-transparent) metallization of films for food packaging.

The term "bioplastics" here is intended to identify any thermo-processable polymer resulting from the fermentation of sugars and/or oils, preferably a biodegradable bioplastic chosen from polyhydroxyalkanoates, polylactic acid (PLA), cellulose-based bioplastics, starch or combinations thereof, copolymers, mixtures or blends.

In practice, the amidated pectin of the abovementioned "pre-treating compound with anchoring function" behaves as a primer and allows an effective deposition of a second layer on the plastic substrate, and possibly also as a gas and vapour barrier.

The amidated pectin of the present invention is advantageously based on pectin extracted from citrus peel, in particular it is a chemically modified pectin with respect to the native structure in that it contains simultaneously carboxyl and amide groups.

Preferably the amidated pectin in accordance with the present invention has a degree of amidation (DA) comprised between 15 and 65 (DA), more preferably comprised between 20 and 40 (DA).

The amidated pectin in accordance with the present invention may optionally also possess a degree of esterification (DE), where a certain number of carboxyl groups have been esterified, for example with methyl alcohol (degree of methoxylation - DM). Preferably the degree of esterification is comprised between 7 and 75 (DE), more preferably between 10 and 30 (DE).

In a preferred embodiment this amidated pectin has a degree of esterification (DE) comprised between 7 and 75, and a degree of amidation (DA) comprised between 15 and 65.

In another embodiment, this pectin has a degree of esterification (DE) comprised between 10 and 30, and a degree of amidation (DA) comprised between 20 and 40. The formulation to obtain the intermediate seaming layer provides for the use of the abovementioned amidated pectin in quantities comprised between 0.1% and 10% by weight with respect to the total weight of the composition, where the part remaining to 100 can only be water.

Said aqueous composition may also optionally contain other co-formulants such as structuring agents, e.g. polyvinyl alcohol; reinforcing agents, e.g. metal alkoxides such as, for example, secondary aluminium tributylate, used in the prior art for hybrid barrier coatings, in the case wherein the aim is to increase the gas and vapour barrier property.

In this case the aqueous composition may have the following formulation (% by weight):
- amidated pectin 3%
- structuring agent 5%
- reinforcing agent 3%

The aqueous composition is then applied onto the polyolefin substrate or bioplastics-based substrate, according to procedures known in the art, using different known methods, depending on the matrix to be coated.

For example, the preferred deposition technique is lacquering, which makes it possible to deposit very thin and perfectly dry layers on plastic films, either already formed (and optionally already mono-, bi-oriented) or newly extruded but not yet oriented, which will then be coated with other functional layers, including simple printing.

The deposition of the present composition, on already formed films, provides for the use of a metal roller provided with surface micro-engravings that "draws out" the abovementioned composition, self-adjusting the quantity to be deposited on the plastic substrate, e.g. film, which is unwound from a reel and passed in contact with said roller, which deposits a specific quantity of lacquer on the plastic film.

The film thus "lacquered" is then passed through a narrow space delimited above by infrared lamps, whose action is to facilitate the evaporation of the water.

Finally, the film lacquered in this way passes through a long slit delimited above by heated plates, e.g. at 90°C, to completely evaporate the residual humidity.

At this point the film is ready to be subjected to subsequent coating depositions on the anchoring layer of amidated pectin, for example metallization, both transparent (e.g., metallic oxides such as SiOₓ and AlOₓ) and conventional non-transparent (simple aluminium, Al), or simple printing (ink deposition) instead of metallization.

Without wanting to be tied to any theory, it is presumable that the presence of carboxylated groups in combination with the presence of polar amide groups in the specific pectin used allows excellent adhesive properties of the coating to the plastic substrate to be had, with particular reference to transparent depositions of metallic oxides (SiOₓ and AlOₓ): this aspect is advantageous when working with polyolefin materials that have an inherent surface resistance (for thermodynamic reasons related to the hydrophobic chemical nature of the material itself).

It should therefore be noted that without the deposition of the primer of amidated pectin, these thin inorganic layers could not be deposited as they would not adhere adequately to the plastic substrate.

It is for this reason that this amidated pectin-based coating performs the function of anchoring agent: on one side (below) it adheres to the plastic substrate; on the other side (above) it interacts with the intense adhesive forces of the transparent coating, or of the printing layer, deposited on it.

In fact, tests performed by the Applicant using different polysaccharides such as chitosan and pullulan have shown that these polysaccharides do not allow an acceptable seaming force, which on PP is around 0.5-0.7 N/25 mm. See the examples (Examples 1 and 2).

It should be noted that the use of a primer in place of an adhesive layer makes the final laminate lighter, with the same final performances, since the thickness of the primer in question is between 0.2 µm and 1.0 µm, compared to the approximately 4-8 µm required for common adhesives.

At the same time, solutions based on amidated pectin in accordance with the subject of the present invention are "greener" with respect to laminates containing adhesive layers, precisely because pectin is a natural biopolymer easily available on the market.

As mentioned above, the deposition of the present composition in accordance with the invention can also be performed continuously during the extrusion of the plastic substrate (i.e. as soon as it is formed and physically stable), before the latter undergoes the process of mono-, bi-orientation.

In fact, the Applicant has found that the application of the present pre-treating seaming compound does not prevent the plastic substrate from reaching the (mono- or bi-) orientation percentage normally achievable by the same substrates not treated superficially.

It should also be underlined that the present coating of amidated pectin also serves another important function, namely that of acting as oxygen barrier, as illustrated in Examples 3 - 5.

Without wanting to be tied to any theory, it can be assumed that this property is guaranteed by inter- and intra-molecular hydrogen bridges.

Therefore, the coating based only on amidated pectin is able to perform a double fundamental function on polyolefin substrates, and on bioplastics-based substrates, ensuring an adequate adhesion of the depositions (metallic metallization, transparent metallization, printing or the like) and also acting as barrier to oxygen permeation.

As mentioned above, the barrier properties attributed to pectin coating can be further extended also to water vapour if an inorganic component, represented by the metal alkoxides family, is added to the formulation.

In particular, aluminium-based metal alkoxides are preferred, such as for example secondary aluminium tributylate which, according to a typical sol-gel reaction scheme, added to the pectin solution, determines an improvement in water vapour barrier properties of about 50%.

In fact, the composition of the present invention also allows a laminate with good water vapour barrier values, if not also improved, to be had, allowing the metallized plastic substrate to reach WVTR values of around 0.5 g/(m²24h) (ASTM F1249, at 38°C and R.H = 90%) but also lower, e.g. around 0.2 g (m²/24h).

In fact, the present primer is able to provide a barrier to water vapour in that it guarantees an adequate adhesion of the metallization layer (to which the actual barrier effect is attributable), both traditional and transparent, to the polyolefin substrate.

In the prior art, in order to obtain the adhesion of the metallization layer to the polyolefin substrate, a plasma treatment of the surface of the substrate is generally used, resulting in a much more expensive and complex treatment with respect to the deposition of the primer with amidated pectin base as defined above in accordance with the present invention.

It should be noted that the application of amidated pectin according to the present invention is extremely advantageous in that the resulting packaging is also much more recyclable than conventional packaging, thus better fulfilling the criteria of lower environmental impact.

In addition, the present primer is also advantageous in that it allows a smaller quantity of metal to be used in the metallization in that the optical density values of the metallized film are lower than the values normally found in currently known metallized films (normally around 2.8-3.0).

### EXAMPLES

In Examples 1-2, adhesion tests (according to the AIMCAL standard) were carried out on a metallization coating (AlOx in example 1; A1 in example 2) on a bi-oriented polypropylene substrate (BOPP) pre-treated with the composition according to the invention (with a pectin base) in comparison with bi-oriented polypropylene substrates pre-treated with different biomolecules (chitosan, pullulan) but belonging to the same class of polysaccharides.

The primer according to the invention (with a pectin base) used in the tests had the following composition (% by weight):

| | |
|---|---|
| - amidated pectin (with degree of amidation 15) | 3%. |
| - water | complement to 100% |

The comparison primers used had the same percentage composition but different biomolecules as defined above, where the chitosan used had a degree of deacetylation of 90 and the pullulan used had an average numerical molecular weight of 200.

The thickness of the pre-treatment layer is 0.2 µm.

Moreover, using as primers the same three aqueous compositions used in Examples 1-2, measurement tests (examples 3,4,5) of oxygen permeability (Oxygen Transmission Rate - OTR), in accordance with ASTM D3985-10, were performed on:
- three BOPP substrates pre-treated only with the compositions used in Examples 1-2 (Example 3);
   and on
- three BOPP substrates pre-treated as in Example 3 and then coated with AlOx coating (Example 4);
   and on
- three BOPP substrates pre-treated as in Example 3 and then coated with A1 coating (Example 5).

The OTR was measured using a specific permeability meter (Multiperm, Extrasolution, Italy) and the measurements were conducted under controlled thermo-hygrometric conditions (T = 23°C; RH = 0%) and with 1 atm partial pressure between the measuring cells.

### Example 1

*Adhesion of an AlOx coating (AlOx coating thickness* ∼*10 Å) deposited on three bi-oriented polypropylene substrates (BOPP, 30 µm) pre-treated with three different biopolymers.*

| Biopolymer | Adhesion (N/25 mm) |
|---|---|
| Pectin | 3.5 ± 0.36 |
| Chitosan (comp.) | 2.2 ± 0.19 |
| Pullulan (comp.) | 1.4 ± 0.15 |

It should be noted that in order to have no delamination and good adhesion to BOPP, the minimum value of adhesion measured must be at least 3 N/25mm) so as to achieve acceptable seaming.

In fact in the prior art, if a primer is not used, it is necessary to pre-treat the surface of BOPP with corona or flame treatments so as to increase the surface energy of the polypropylene and bring it from a value of about 28-30 mJ/m² (PP not surface-treated) to a minimum value of about 38 mJ/m² in order to obtain adequate adhesion forces.

### Example 2

*Adhesion of an Al coating (coating thickness of Al* ∼ *10Å) deposited on three bi-oriented polypropylene substrates (BOPP, 30 µm) pre-treated with the three different biopolymers.*

| Biopolymer | Adhesion (N/25 mm) |
|---|---|
| Pectin | 4.6 ± 0.42 |
| Chitosan (comp.) | 0.5 ± 0.06 |
| Pullulan (comp.) | 0.7 ± 0.04 |

### Example 3

*Oxygen Transmission Rate (OTR) of bi-oriented polypropylene (BOPP, 30 µm), lacquered, i.e. only pre-treated with the three different biopolymers.*

| Biopolymer | OTR (cc/m² 24h) |
|---|---|
| Pectin | 0.3 ± 0.04 |
| Chitosan (comp.) | 2.5 ± 0.32 |
| Pullulan (comp.) | 4.8 ± 0.56 |

OTR of non-treated BOPP 30 µm (23°C, 0% RH, 1 atm) = 1600 cc/(m² 24h).

### Example 4

*Oxygen Transmission Rate (OTR) of bi-oriented polypropylene (BOPP, 30 µm) pre-treated with three different biopolymers and subsequent deposition of an AlOx coating (AlOx coating thickness* ∼ *10 Å).*

| Biopolymer | OTR (cc/m² 24h) |
|---|---|
| Pectin | 0.28 ± 0.03 |
| Chitosan (comp.) | 2.7 ± 0.33 |
| Pullulan (comp.) | 5.0 ± 0.48 |

OTR BOPP 30 µm (23°C, 0% RH, 1 atm) = 1600 cc/(m² 24h).

### Example 5

*Oxygen Transmission Rate (OTR) of bi-oriented polypropylene (BOPP, 30 µm) pre-treated with three different biopolymers and subsequent deposition of an Al coating (thickness of coating of Al* ∼ *10 Å).*

| Biopolymer | OTR (cc/m² 24h) |
|---|---|
| Pectin | 0.27 ± 0.02 |
| Chitosan (comp.) | 2.8 ± 0.34 |
| Pullulan (comp.) | 4.9 ± 0.46 |

OTR BOPP 30 µm (23°C, 0% RH, 1 atm) = 1600 cc/(m² 24h)

## Claims

1. Use of amidated pectin, as primer with anchoring function, applied directly on polyolefin substrates, preferably polyethylene and polypropylene, or in polylactic acid (PLA), where said primer is interposed in contact, on one side, with said substrate and, on the other side, with at least one coating, including also the printing.

2. Use of an aqueous composition comprising amidated pectin, as primer with anchoring function, applied directly onto polyolefin substrates, preferably polyethylene and polypropylene, or in polylactic acid (PLA), where said amidated pectin is interposed in contact on one side with said substrate and on the other side with at least one coating, including also the printing.

3. Use according to claim 1 or 2 where said amidated pectin has a degree of amidation (DA) comprised between 15 and 65.

4. Use according to claim 2 or 3, wherein said amidated pectin is in quantities comprised between 0.1% and 10% by weight with respect to the total weight of the composition.

5. Use according to any one of claims 2 to 4, where said amidated pectin is in a mixture with one or more co-formulants such as structuring agents, e.g. polyvinyl alcohol, reinforcing agents, e.g. metal alkoxides such as secondary aluminium tributylate, or the like.

6. Primer coated polyolefin substrates, in particular polyethylene, polypropylene, or in polylactic acid (PLA), said primer being formed by an aqueous composition comprising amidated pectin, and optionally one or more co-formulants such as structuring agents, e.g. polyvinyl alcohol, reinforcing agents, e.g. metal alkoxides such as, for example, secondary aluminium tributylate, or the like.

7. Primer coated polyolefin substrates according to claim 6, wherein said amidated pectin is in quantities comprised between 0.1% and 10% by weight with respect to the total weight of the composition of said primer.

8. Multi-layer laminate comprising a polyolefin (polyethylene and polypropylene) or bioplastic (polylactic acid, PLA) substrate and at least one coating such as metallic metallization, transparent metallization, printing or the like, and a primer with a base of amidated pectin as defined in the preceding claims 1 to 7, wherein said primer is interposed between and in contact with said polyolefin or bioplastic substrate and at least one coating including also printing.

## Patentansprüche

1. Verwendung von amidiertem Pektin, als Primer mit Verankerungsfunktion, der direkt auf Polyolefinsubstrate, vorzugsweise Polyethylen und Polypropylen, oder in Polymilchsäure (PLA), aufgetragen wird, wobei der Primer in Kontakt, auf einer Seite, mit dem Substrat und, auf der anderen Seite, mit mindestens einer Beschichtung, die auch die Bedruckung umfasst, eingefügt wird.

2. Verwendung einer wässrigen Zusammensetzung, umfassend amidiertes Pektin, als Primer mit Verankerungsfunktion, der direkt auf Polyolefinsubstrate, vorzugsweise Polyethylen und Polypropylen, oder in Polymilchsäure (PLA), aufgetragen wird, wobei der Primer in Kontakt auf einer Seite mit dem Substrat und auf der anderen Seite mit mindestens einer Beschichtung, die auch die Bedruckung umfasst, eingefügt wird.

3. Verwendung gemäß Anspruch 1 oder 2, wobei das amidierte Pektin einen Amidierungsgrad (DA) aufweist, der zwischen 15 und 65 liegt.

4. Verwendung gemäß Anspruch 2 oder 3, wobei das amidierte Pektin in Mengen vorhanden ist, die zwischen 0,1 und 10 Gew.-%, bezogen auf das Gesamtgewicht der Zusammensetzung, liegen.

5. Verwendung gemäß Anspruch 2 oder 4, wobei das amidierte Pektin in einer Mischung mit einem oder mehreren Formulierungshilfsstoffen, wie etwa Strukturmitteln, z.B. Polyvinylalkohol, Verstärkungsmitteln, z.B. Metallalkoxiden, wie zum Beispiel sekundärem Aluminiumtributylat oder ähnlichem vorliegt.

6. Primer-beschichtete Polyolefinsubstrate, insbesondere Polyethylen, Polypropylen, oder in Polymilchsäure (PLA), wobei der Primer durch eine wässrige Zusammensetzung, umfassend amidiertes Pektin, und gegebenenfalls einen oder mehrere Formulierungshilfsstoffe, wie etwa Strukturmittel, z.B. Polyvinylalkohol, Verstärkungsmittel, z.B. Metallalkoxide, wie zum Beispiel sekundäres Aluminiumtributylat oder ähnliches gebildet wird.

7. Primer-beschichtete Polyolefinsubstrate gemäß Anspruch 6, wobei das amidierte Pektin in Mengen vorhanden ist, die zwischen 0,1 und 10 Gew.-%, bezogen auf das Gesamtgewicht der Zusammensetzung des Primers, liegen.

8. Mehrschichtiges Laminat, umfassend ein Polyolefin- (Polyethylen und Polypropylen) oder Biokunststoff- (Polymilchsäure, PLA) -Substrat und mindestens eine Beschichtung, wie etwa metallische Metallisierung, transparente Metallisierung, Bedruckung oder ähnliches, und einen Primer mit einer Basis aus amidiertem Pektin, wie in den vorangehenden Ansprüchen 1 bis 7 definiert, wobei der Primer zwischen und in Kontakt mit dem Polyolefin- oder Biokunststoff-Substrat und mindestens einer Beschichtung, die auch eine Bedruckung umfasst, eingefügt ist.

## Revendications

1. Utilisation d'une pectine amidée, comme amorce avec fonction d'ancrage, appliquée directement sur des substrats de polyoléfine, de préférence le polyéthylène et le polypropylène, ou dans l'acide polylactique (PLA), où ladite amorce est interposée en contact, sur un côté, avec ledit substrat et, de l'autre côté, avec au moins un revêtement, comprenant aussi l'impression.

2. Utilisation d'une composition aqueuse comprenant de la pectine amidée, comme amorce avec fonction d'ancrage, appliquée directement sur des substrats de polyoléfine, de préférence le polyéthylène et le polypropylène, ou dans l'acide polylactique (PLA), où ladite pectine amidée est interposée en contact sur un côté avec ledit substrat et sur l'autre côté avec au moins un revêtement, comprenant aussi l'impression.

3. Utilisation selon la revendication 1 ou 2 où ladite pectine amidée a un degré d'amidation (DA) compris entre 15 et 65.

4. Utilisation selon la revendication 2 ou 3, dans laquelle ladite pectine amidée est en quantités comprises entre 0,1 % et 10 % en poids par rapport au poids total de la composition.

5. Utilisation selon l'une quelconque des revendications 2 à 4, où ladite pectine amidée est dans un mélange avec un ou plusieurs co-formulants tels que des agents structurants, par exemple l'alcool polyvinylique, des agents renforçateurs, par exemple les alcoxydes métalliques tels que le tributylate d'aluminium secondaire ou similaires.

6. Substrats de polyoléfine revêtus d'amorce, en particulier le polyéthylène, le polypropylène, ou dans l'acide polylactique (PLA), ladite amorce étant formée par une composition aqueuse comprenant de la pectine amidée, et éventuellement un ou plusieurs co-formulants tels que des agents structurants, par exemple l'alcool polyvinylique, des agents renforçateurs, par exemple des alcoxydes métalliques tels que, par exemple, le tributylate d'aluminium secondaire ou similaires.

7. Substrats de polyoléfine revêtus d'amorce selon la revendication 6, dans lesquels ladite pectine amidée est en quantités comprises entre 0,1 % et 10 % en poids par rapport au poids total de la composition de ladite amorce.

8. Stratifié multi-couches comprenant un substrat de polyoléfine (polyéthylène et polypropylène) ou de bioplastique (acide polylactique, PLA) et au moins un revêtement tel que la métallisation métallique, la métallisation transparente, l'impression ou similaire, et une amorce avec une base de pectine amidée telle que définie dans les revendications précédentes 1 à 7, ladite amorce étant interposée entre et en contact avec ledit substrat de polyoléfine ou de bioplastique et au moins un revêtement comprenant aussi l'impression.
